# EUROPEAN PATENT APPLICATION

(11) **EP 4 472 251 A1**
(43) Date of publication of application: **04.12.2024**
(21) Application number: 24174851.6
(22) Date of filing: 08.05.2024
(51) Int. Cl.: H04W 4/70, H04W 4/021

(54) **SELECTION OF USER EQUIPMENT FOR PROVIDING BACKSCATTERING SERVICE TO AMBIENT IOT DEVICES**

(30) Priority: 02.06.2023 FI 20235619
(71) Applicant: Nokia Solutions and Networks Oy, 02610 Espoo (FI)
(72) Inventor: BUTT, Muhammad Majid, Naperville (US); RATASUK, Rapeepat, Inverness (US); MANGALVEDHE, Nitin, Hoffman Estates (US)
(74) Representative: Nokia EPO representatives

(57) **Abstract**

A network device includes at least one processor and at least one memory. The memory stores instructions which, when executed by the processor(s), cause the network device at least to: access ambient IoT device deployment information for ambient IoT devices and user equipment apparatus (UE) deployment information for user equipment apparatuses (UEs); select, based on the ambient IoT device deployment information and the UE deployment information, candidate user equipment apparatuses (candidate UEs), from among the UEs, for providing backscattering service to ambient IoT devices; and iteratively select a subset of UEs, among the candidate UEs, to provide the backscattering service, where the iterative selecting is based at least on, for each iteration, at least one of: respective availability of the plurality of candidate UEs to provide the backscattering service, or at least one criterion relating to respective information in backscattering signals provided by the plurality of ambient IoT devices.

## Description

### FIELD

Various example embodiments relate generally to wireless networking and, more particularly, to ambient Internet of Things (IoT) devices in wireless networking.

### BACKGROUND

The Internet of Things (IoT) generally describes a network of devices that have communication capability to exchange and/or share information with the network. Each of the devices may include a modem that enables wireless connectivity. Certain estimates show that, by 2030, around twenty-nine billion IoT devices may be deployed around the world. Advancements in communications technologies and/or infrastructure will need to keep pace to support growth of IoT devices. Accordingly, there is continuing interest in improving wireless and communications technologies.

### SUMMARY

In accordance with aspects of the present disclosure, a network device includes at least one processor and at least one memory storing instructions. The instructions, when executed by the at least one processor, cause the network device at least to: access ambient IoT device deployment information for a plurality of ambient IoT devices and user equipment apparatus (UE) deployment information for a plurality of user equipment apparatuses (UEs); select, based on the ambient IoT device deployment information and the UE deployment information, a plurality of candidate user equipment apparatuses (candidate UEs), from among the plurality of UEs, for providing backscattering service to ambient IoT devices; and iteratively select a subset of UEs, among the plurality of candidate UEs, to provide the backscattering service, where the iterative selecting is based at least on, for each iteration, at least one of: respective availability of the plurality of candidate UEs to provide the backscattering service, or at least one criterion relating to respective information in backscattering signals provided by the plurality of ambient IoT devices.

In an aspect of the network device, the ambient IoT device deployment information may include at least one of: approximate locations of the plurality of ambient IoT devices, or density of the plurality of ambient IoT devices in one or more regions.

In an aspect of the network device, the UE deployment information may include at least one of: approximate locations of the plurality of UEs, or number of UEs in one or more regions.

In an aspect of the network device, in iteratively selecting a subset of UEs, the instructions, when executed by the at least one processor, may cause the network device at least to, for each iteration: transmit, to the plurality of candidate UEs, a respective request for an indication of availability to provide the backscattering service with at least a specified activation power P to ambient IoT devices; and receive, from at least some of the plurality of candidate UEs, respective responses to the respective request, where the respective responses include, for each respective UE, one of: an indication of availability to provide the backscattering service, or an indication of no availability to provide the backscattering service.

In an aspect of the network device, for each iteration, the respective request for an indication of availability to provide the backscattering service may include: availability to provide backscattering service for at least a respective duration of time T1, where the respective duration of time T1 for a respective iteration is adjustable.

In an aspect of the network device, the instructions, when executed by the at least one processor, may further cause the network device at least to: for at least one iteration, adjust the respective duration of time T1 for the respective iteration, where the adjusting is configured to affect a number of UEs available to provide the backscattering service.

In an aspect of the network device, the at least one criterion relating to information in backscattering signals provided by the plurality of ambient IoT devices may include at least one of: number of ambient IoT devices providing information in backscattering signals, or percentage of the plurality of ambient IoT devices providing information in backscattering signals.

In an aspect of the network device, in iteratively selecting the subset of the plurality of candidate UEs to provide the backscattering service, the instructions, when executed by the at least one processor, may cause the network device at least to select a larger subset of UEs in response to at least one of: the number of ambient IoT devices providing information in backscattering signals being less than a number threshold, or the percentage of the plurality of ambient IoT devices providing information in backscattering signals being less than a percentage threshold.

Any of the following methods and their elements may be implemented and/or performed by and/or in a network device.

In accordance with aspects of the present disclosure, a method includes: accessing ambient IoT device deployment information for a plurality of ambient IoT devices and user equipment apparatus (UE) deployment information for a plurality of user equipment apparatuses (UEs); selecting, based on the ambient IoT device deployment information and the UE deployment information, a plurality of candidate user equipment apparatuses (candidate UEs), from among the plurality of UEs, for providing backscattering service to ambient IoT devices; and iteratively selecting a subset of UEs, among the plurality of candidate UEs, to provide the backscattering service, where the iterative selecting is based at least on, for each iteration, at least one of: respective availability of the plurality of candidate UEs to provide the backscattering service, or at least one criterion relating to respective information in backscattering signals provided by the plurality of ambient IoT devices.

In an aspect of the method, the ambient IoT device deployment information may include at least one of: approximate locations of the plurality of ambient IoT devices, or density of the plurality of ambient IoT devices in one or more regions.

In an aspect of the method, the UE deployment information may include at least one of: approximate locations of the plurality of UEs, or number of UEs in one or more regions.

In an aspect of the method, iteratively selecting a subset of UEs may include, for each iteration: transmitting, to the plurality of candidate UEs, a respective request for an indication of availability to provide the backscattering service with at least a specified activation power P to ambient IoT devices; and receive, from at least some of the plurality of candidate UEs, respective responses to the respective request, the respective responses comprising, for each respective UE, one of: an indication of availability to provide the backscattering service, or an indication of no availability to provide the backscattering service.

In an aspect of the method, for each iteration, the respective request for an indication of availability to provide the backscattering service may include: availability to provide backscattering service for at least a respective duration of time T1, where the respective duration of time T1 for a respective iteration is adjustable.

In an aspect of the method, the method may further include: for at least one iteration, adjusting the respective duration of time T1 for the respective iteration, where the adjusting is configured to affect a number of UEs available to provide the backscattering service.

In an aspect of the method, the at least one criterion relating to information in backscattering signals provided by the plurality of ambient IoT devices may include at least one of: number of ambient IoT devices providing information in backscattering signals, or percentage of the plurality of ambient IoT devices providing information in backscattering signals.

In an aspect of the method, iteratively selecting the subset of the plurality of candidate UEs to provide the backscattering service may include selecting a larger subset of UEs in response to at least one of: the number of ambient IoT devices providing information in backscattering signals being less than a number threshold, or the percentage of the plurality of ambient IoT devices providing information in backscattering signals being less than a percentage threshold.

In accordance with aspects of the present disclosure, a user equipment apparatus includes at least one processor and at least one memory storing instructions. The instructions, when executed by the at least one processor, cause the user equipment apparatus at least to: receive, from a network device, a first request for an indication of availability to provide backscattering service to ambient IoT devices for a first duration of time; transmit, to the network device, a response to the first request; receive, from a network device, a second request for an indication of availability to provide backscattering service to ambient IoT devices for a second duration of time; and transmit, to the network device, a response to the second request.

In an aspect of the user equipment apparatus, the second duration of time may be less than the first duration of time.

In an aspect of the user equipment apparatus, the response to the first request may include an indication of no availability to provide the backscattering service for the first duration of time, and the response to the second request may include an indication of availability to provide the backscattering service for the second duration of time.

In an aspect of the user equipment apparatus, the response to the first request may include an indication of availability to provide the backscattering service for the first duration of time, and wherein the response to the second request may include an indication of no availability to provide the backscattering service for the second duration of time.

In an aspect of the user equipment apparatus, the second duration of time may be greater than the first duration of time.

In an aspect of the user equipment apparatus, the response to the first request may include an indication of availability to provide the backscattering service for the first duration of time, and the response to the second request may include an indication of no availability to provide the backscattering service for the second duration of time.

Any of the following methods and their elements may be implemented and/or performed by and/or in a user equipment apparatus.

In accordance with aspects of the present disclosure, a method includes: receiving, from a network device, a first request for an indication of availability to provide backscattering service to ambient IoT devices for a first duration of time; transmitting, to the network device, a response to the first request; receiving, from a network device, a second request for an indication of availability to provide backscattering service to ambient IoT devices for a second duration of time; and transmitting, to the network device, a response to the second request.

In an aspect of the method, the second duration of time may be less than the first duration of time.

In an aspect of the method, the response to the first request may include an indication of no availability to provide the backscattering service for the first duration of time, and the response to the second request may include an indication of availability to provide the backscattering service for the second duration of time.

In an aspect of the method, the response to the first request may include an indication of availability to provide the backscattering service for the first duration of time, and the response to the second request may include an indication of no availability to provide the backscattering service for the second duration of time.

In an aspect of the method, the second duration of time may be greater than the first duration of time.

In an aspect of the method, the response to the first request may include an indication of availability to provide the backscattering service for the first duration of time, and the response to the second request may include an indication of no availability to provide the backscattering service for the second duration of time.

In various examples, any of the foregoing methods may be a computer-implemented method. In various examples, any of the foregoing methods may be a process-implemented method that is implemented by one or more processors.

According to some aspects, there is provided the subject matter of the independent claims. Some further aspects are defined in the dependent claims.

### BRIEF DESCRIPTION OF THE DRAWINGS

Some example embodiments will now be described with reference to the accompanying drawings.
FIG. 1 is a diagram of an example embodiment of wireless networking between a network system and a user equipment apparatus (UE), according to one illustrated aspect of the disclosure;
FIG. 2 is a diagram of an example embodiment of a monostatic configuration for exciting an ambient IoT device and reading backscatter from the ambient IoT device, according to one illustrated aspect of the present disclosure;
FIG. 3 is a diagram of an example embodiment of a bistatic configuration for exciting an ambient IoT device and reading backscatter from the ambient IoT device, according to one illustrated aspect of the present disclosure;
FIG. 4 is a diagram of an example embodiment of wireless communications between UEs, ambient IoT devices, and a network device, according to one illustrated aspect of the present disclosure;
FIG. 5 is a diagram of an example embodiment of operations for selecting UEs to provide backscattering service, according to one illustrated aspect of the disclosure;
FIG. 6 is a diagram of another example embodiment of operations for selecting UEs to provide backscattering service, according to one illustrated aspect of the disclosure;
FIG. 7 is a diagram of an example embodiment of signals and operations among a networking device, a UE, and a tag, for authentication in a monostatic configuration, according to one illustrated aspect of the disclosure;
FIG. 8 is a diagram of an example embodiment of signals and operations among a networking device, a reader, an exciter, and a tag, for authentication in a bistatic configuration, according to one illustrated aspect of the disclosure;
FIG. 9 is a diagram of an example embodiment of signals for writing and reading tokens, according to one illustrated aspect of the present disclosure; and
FIG. 10 is a diagram of an example embodiment of components of a UE or of a network device, according to one illustrated aspect of the present disclosure.

### DETAILED DESCRIPTION

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5G NR), 5G Advance, 6G (and beyond) and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

The present disclosure may use the term "serving network device" to refer to a network node or network device (or a portion thereof) that services a UE. The present disclosure may use the term "serving UE" to refer to a UE that services an ambient IoT device (e.g., providing backscattering service), and may use the term "candidate UE" to refer to a UE that is may potentially provide service to an ambient IoT device (e.g., provide backscattering service), and may use the term "target UE" to refer to a UE that is the target of a command to have the UE serve the ambient IoT device.

As used herein, the terms "transmit to," "receive from," and "cooperate with," (and their variations) include communications that may or may not involve communications through one or more intermediate devices or nodes. The term "acquire" (and its variations) includes acquiring in the first instance or reacquiring after the first instance. The term "connection" may mean a physical connection or a logical connection.

An ambient device refers to a device that harvests energy from ambient sources such as radio waves, light, and/or vibrations, etc. An ambident device may use energy harvested from wireless radio waves or any other form of energy that can be harvested in its particular deployment scenario and may operate with ultra-low power in the range from tens of microwatts to hundreds of microwatts. For example, if energy is harvested from wireless radio waves, the output power of energy harvester could be from several micro-watt to tens of micro-watt. If a small solar panel is used for energy harvesting from solar/light, the output power could be less than 1 milli-watt due to size of the small solar panel. An ambient device may be battery-less or may store a limited amount of power (e.g., in a capacitor).

Ambient devices may be passive or active. An active energy harvesting device can harvest energy and then use an active circuit to transmit. While active devices include, for example, active components such as amplifiers, passive devices do not have any active components. Rather, passive energy harvesting devices use a communication technique known as backscattering, in which an external radio frequency (RF) signal is used for activation/excitation of the device and in which the RF signal is modulated with information by the passive device before being reflected/backscattered. In various examples, the modulating of information on the reflected/backscattering signal may be referred to as transmitting the backscattered signal. In some examples, an ambient device may have capability to switch between being active or passive.

As will be explained in greater detail later in the present disclosure, the same device may be used to transmit the RF signal to activate a passive ambient device and to read the backscatter signal from the passive ambident device (called "monostatic" configuration) or different devices may be used to transmit the activation and to read the backscatter (called "bistatic" configuration). The terms "activate," "excite," "illuminate," and "energize," and their variants, may be used interchangeably herein. The exciters and/or the readers may be 3GPP devices (e.g., gNB, smartphone, dedicated exciter, dedicated reader, or dedicated reader/exciter, etc.) or may be non-3GPP devices.

Ambient devices may be IoT devices. As mentioned above, IoT generally describes a network of devices that have communication capability to exchange and/or share information with the network. Ambient IoT devices, thus, are connected devices that harvest energy from ambient sources. As used herein, the term "ambient IoT device" may be used interchangeably with the terms "ambient IoT tag" or "ambient tag." An ambient tag may, for example, be attached to objects that need to be tracked, identified, or otherwise queried.

To read an ambient IoT device's transmission (e.g., active or backscatter), a reader should generally be in the vicinity of the ambient IoT device. Therefore, when an application or operation involves receiving ambient IoT device transmissions, exciters and readers in the vicinity of the ambident IoT devices may be used to do so. In the present disclosure, exciters and readers may be referred to separately. Unless indicated otherwise, it is intended and shall be understood that references to exciters and readers apply to both monostatic and bistatic configurations. Additionally, where a monostatic configuration is shown or described in the present disclosure, the disclosed aspects shall be applicable to a bistatic configuration, and where a bistatic configuration is shown or described in the present disclosure, the disclosed aspects shall be applicable to a monostatic configuration.

Aspects of the present disclosure provides techniques for using user equipment apparatuses (UEs), which have wireless communication capabilities (e.g., 5G NR, 5G Advance, Wi-Fi, etc.), as exciters and/or readers of ambient IoT devices. As used herein, the term "backscattering service" refers to exciting or activating a passive ambient device and/or reading backscattering signals from a passive ambient device. Aspects of the present disclosure relate to identifying UEs that are in the vicinity of ambient IoT devices and that may provide backscattering service to such ambient IoT devices. Aspects of the present disclosure operate to engage an optimal number of UEs so that a sufficient number of ambient IoT devices are activated without wasting UE resources.

Aspects of the present disclosure provide techniques for allowing UEs to authenticate ambient IoT devices and for allowing ambient IoT devices to authenticate UEs. Authentication refers to a way by which a device may confirm that another entity or device is authorized to communicate with or access it. Because ambient IoT devices may have some processing capability, aspects of the present disclosure provide ambient IoT devices that authenticate a UE before providing a backscattered signal.

The present disclosure uses 5G NR as an example of a wireless network and uses smartphones as an example of UEs. It is intended and shall be understood that such examples are merely illustrative, and the present disclosure is applicable to other wireless networks and user equipment apparatuses.

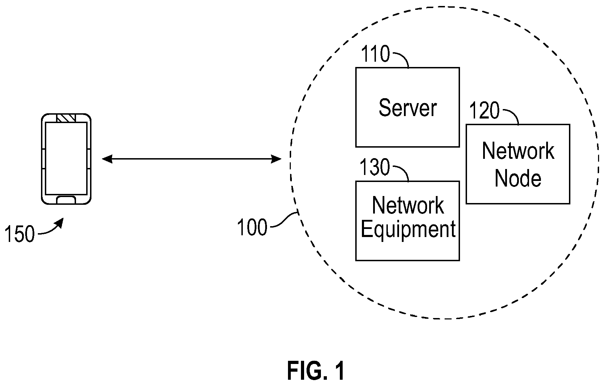

FIG. 1 is a diagram depicting an example of wireless networking between a network system 100 and a user equipment apparatus (UE) 150. The network system 100 may include one or more network nodes 120, one or more servers 110, and/or one or more network equipment 130 (e.g., test equipment). The network nodes 120 will be described in more detail below. As used herein, the term "network device" may refer to any component of the network system 100, such as the server 110, the network node 120, the network equipment 130, any component(s) of the foregoing, and/or any other component(s) of the network system 100. Examples of network devices include, without limitation, apparatuses implementing aspects of 5G NR, among others. The present disclosure describes embodiments related to 5G NR and embodiments that involve aspects defined by 3rd Generation Partnership Project (3GPP). However, it is contemplated that embodiments relating to other wireless networking technologies are encompassed within the scope of the present disclosure.

The following description provides further details of examples of network nodes. In a 5G NR network, a gNodeB (also known as gNB) may include, e.g., a node that provides NR user plane and control plane protocol terminations towards the UE and that is connected via a NG interface to the 5G core (5GC), e.g., according to 3GPP TS 38.300 V16.6.0 (2021-06) section 3.2, which is hereby incorporated by reference herein.

A gNB supports various protocol layers, e.g., Layer 1 (L1) - physical layer, Layer 2 (L2), and Layer 3 (L3).

The layer 2 (L2) of NR is split into the following sublayers: Medium Access Control (MAC), Radio Link Control (RLC), Packet Data Convergence Protocol (PDCP) and Service Data Adaptation Protocol (SDAP), where, e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC quality of service (QoS) flows;
∘ Control channels include broadcast control channel (BCCH) and physical control channel (PCCH).

Layer 3 (L3) includes, e.g., radio resource control (RRC), e.g., according to 3GPP TS 38.300 V16.6.0 (2021-06) section 6, which is hereby incorporated by reference herein.

A gNB central unit (gNB-CU) includes, e.g., a logical node hosting, e.g., radio resource control (RRC), service data adaptation protocol (SDAP), and packet data convergence protocol (PDCP) protocols of the gNB or RRC and PDCP protocols of the en-gNB, that controls the operation of one or more gNB distributed units (gNB-DUs). The gNB-CU terminates the F1 interface connected with the gNB-DU. A gNB-CU may also be referred to herein as a CU, a central unit, a centralized unit, or a control unit.

A gNB Distributed Unit (gNB-DU) includes, e.g., a logical node hosting, e.g., radio link control (RLC), media access control (MAC), and physical (PHY) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU. A gNB-DU may also be referred to herein as DU or a distributed unit.

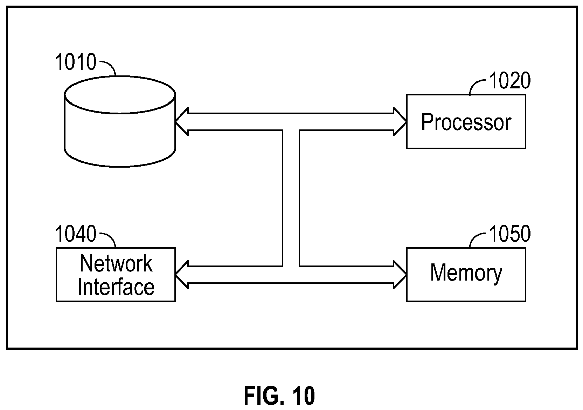

As used herein, the term "network node" may refer to any of a gNB, a gNB-CU, or a gNB-DU, or any combination of them. A RAN (radio access network) node or network node such as, e.g., a gNB, gNB-CU, or gNB-DU, or parts thereof, may be implemented by, e.g., a network device with at least one processor and/or at least one memory and with processor-readable instructions ("program") configured to support and/or provision and/or process CU and/or DU related functionality and/or features, and/or at least one protocol (sub-)layer of a RAN (radio access network), e.g., layer 2 and/or layer 3. Different functional splits between the central and distributed unit are possible. An example of such a device and its components will be described in connection with FIG. 10 below.

A network device, as used herein, may have components in a single housing, components in multiple housings at a single location, or may have components distributed across different geographies. All such configurations are contemplated to be within the scope of the present disclosure.

The gNB-CU and gNB-DU parts may, e.g., be co-located or physically separated. The gNB-DU may even be split further, e.g., into two parts, e.g., one including processing equipment and one including an antenna. A central unit (CU) may also be called BBU/REC/RCC/C-RAN/V-RAN, O-RAN, or part thereof. A distributed unit (DU) may also be called RRH/RRU/RE/RU, or part thereof. Hereinafter, in various example embodiments of the present disclosure, a network node, which supports at least one of central unit functionality or a layer 3 protocol of a radio access network, may be, e.g., a gNB-CU. Similarly, a network node, which supports at least one of distributed unit functionality or a layer 2 protocol of the radio access network, may be, e.g., a gNB-DU.

A gNB-CU may support one or multiple gNB-DUs. A gNB-DU may support one or multiple cells and, thus, could support a serving cell for a user equipment apparatus (UE) or support a candidate cell for handover, dual connectivity, and/or carrier aggregation, among other procedures.

The user equipment apparatus (UE) 150 may be or include a wireless or mobile device, an apparatus with a radio interface to interact with a RAN (radio access network), a smartphone, an in-vehicle apparatus, an IoT device, or a M2M device, among other types of user equipment. Such UE 150 may include: at least one processor; and at least one memory including program code; where the at least one memory and the computer program code are configured to, with the at least one processor, cause the apparatus at least to perform certain operations, such as, e.g., RRC connection to the RAN. An example of components of a UE will be described in connection with FIG. 10. In embodiments, the UE 150 may be configured to generate a message (e.g., including a cell ID) to be transmitted via radio towards a RAN (e.g., to reach and communicate with a serving cell). In embodiments, the UE 150 may generate and transmit and receive RRC messages containing one or more RRC PDUs (packet data units). Persons skilled in the art will understand RRC protocol as well as other procedures a UE may perform.

With continuing reference to FIG. 1, in the example of a 5G NR network, the network system 100 provides one or more cells, which define a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a sub-carrier, a beam, etc. In embodiments, the network node 120 may be called a base station.

FIG. 1 provides an example and is merely illustrative of a network system 100 and a UE 150. Persons skilled in the art will understand that the network system 100 includes components not illustrated in FIG. 1 and will understand that other user equipment apparatuses may be in communication with the network system 100.

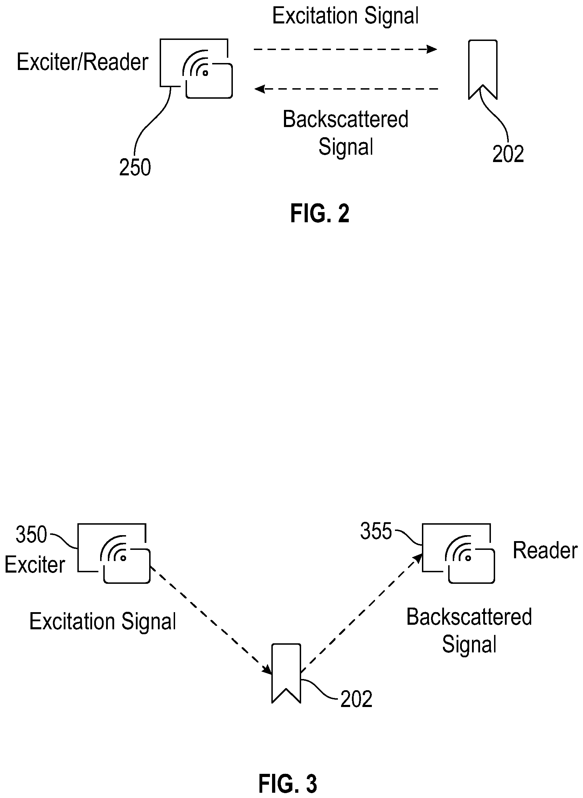

FIG. 2 is a diagram of an example embodiment of a monostatic configuration for exciting an ambient IoT device and reading backscatter from the ambient IoT device. The illustrated monostatic configuration includes an exciter and reader combination device 250 (which may be UE 150 of FIG. 1) and includes an ambient IoT device 202 that is capable of passive operation. The device 250 is configured to act both as the exciter and the reader. The exciter/reader device 250 emits a radio-frequency (RF) signal, and the ambient IoT device 202 harvests energy from the RF signal and is activated. Once activated, the ambient IoT device 202 modulates the received RF signal with information stored in the ambient IoT device 202 and reflects the modulated RF signal as the backscattered signal. The exciter/reader device 250 then receives the backscattered signal (i.e., the modulated RF signal) and demodulates it to extract the information from the ambient IoT device 202. In examples, a low-complexity modulation scheme, such as on-off keying (OOK), may be used.

FIG. 3 is a diagram of an example embodiment of a bistatic configuration for exciting an ambient IoT device and reading backscatter from the ambient IoT device. The illustrated bistatic configuration includes an exciter device 350, a reader device 355, and an ambient IoT device 202 capable of passive operation. The exciter device 350 and the reader device 355 may each be a UE (e.g., may be separate UEs like the UE 150 of FIG. 1). The difference between the bistatic configuration and the monostatic configuration is that the reader is a separate device from the exciter. The exciter device 350 emits a radio-frequency (RF) signal, and the ambient IoT device 202 harvests energy from the RF signal and is activated. Once activated, the ambient IoT device 202 modulates the received RF signal with information stored in the ambient IoT device 202 and reflects the modulated RF signal as the backscattered signal. The reader device 355 then receives the backscattered signal (i.e., the modulated RF signal) and demodulates it to extract the information from the ambient IoT device 202.

The bistatic configuration enables more flexible network and device topologies and may enable the exciter device 350 and/or the reader device 355 to be placed or used in locations that have lower path loss between the devices 350, 355 and the ambient IoT device 202. In various examples, the exciter device 350 may be a UE (e.g., UE 150, FIG. 1) and the reader device 355 may be a network node (e.g., 120, FIG. 1, e.g., gNB) which receives the backscattered signal from the ambient IoT device 202. Such embodiments are contemplated to be within the scope of the present disclosure.

In FIGS. 2 and 3, each of the exciter/reader devices 250, 350, 355 may have communication capability, such as capability for wireless communication with a wireless network (e.g., 5G NR, 5G Advance, Wi-Fi, etc.). In various examples, the ambient IoT device 202 may have capability to receive wireless communications from a wireless network. The ambient IoT device 202 have a memory that stores information and may be writable by a signal (e.g., activation signal). In various examples, the ambient IoT device may be capable of reading information in an incoming signal (e.g., activation signal) and may have some capability to process the information it reads. Such examples and features are within the scope of the present disclosure.

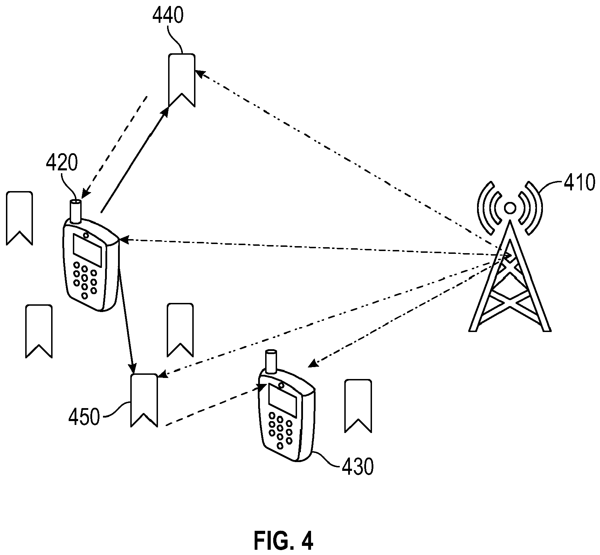

FIG. 4 is a diagram of an example embodiment of wireless communications between UEs, ambient IoT devices (e.g., ambient tags), and a network device. The illustrated example includes a network device 410, a monostatic UE 420, a bistatic reader UE 430, and ambient IoT devices 440, 450. The network device 410 may be part of a 5G NR network and may be a network node (e.g., gNB) or portion thereof. The monostatic UE 420 and the bistatic reader 430 may be smartphones that are capable of communicating with the network device 410 (e.g., gNB). The ambient IoT devices 440, 450 may be passive devices, such as device 202 of FIG. 2 and FIG. 3. These examples are merely illustrative, and the network device 410, UEs 420, 430, and ambient IoT tags 440, 450 may be other types of devices.

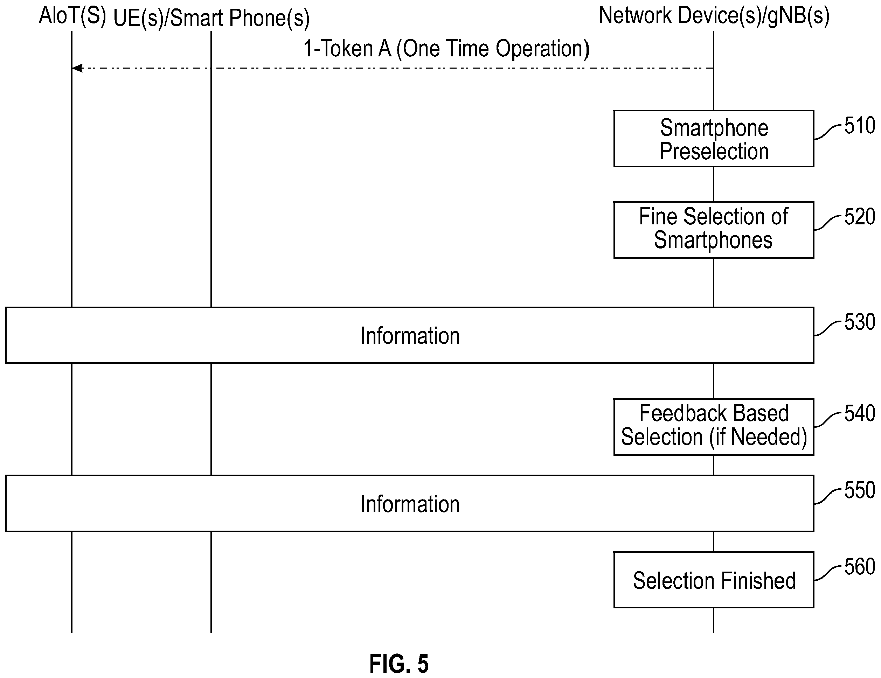

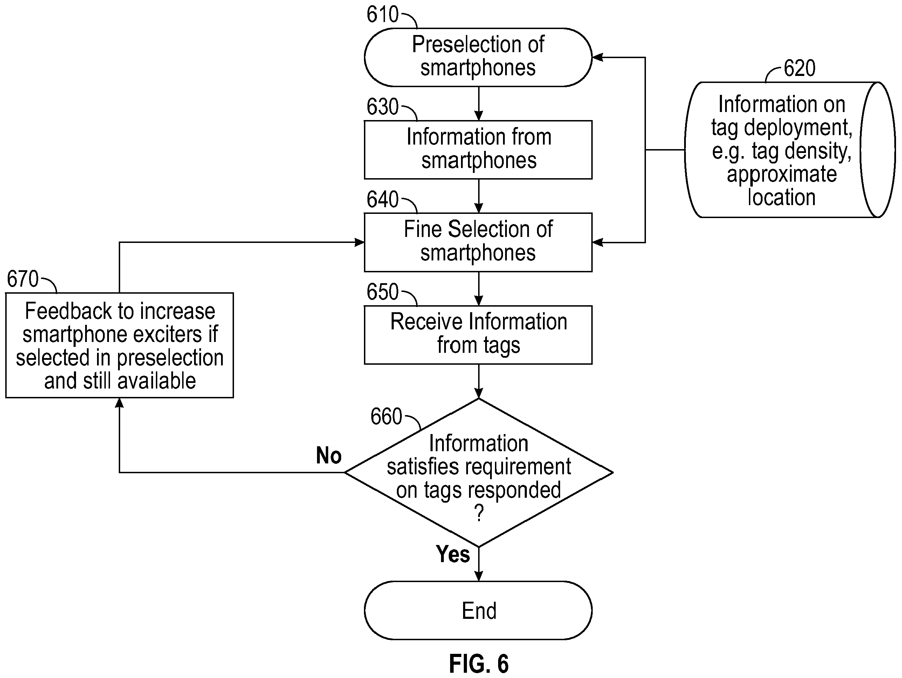

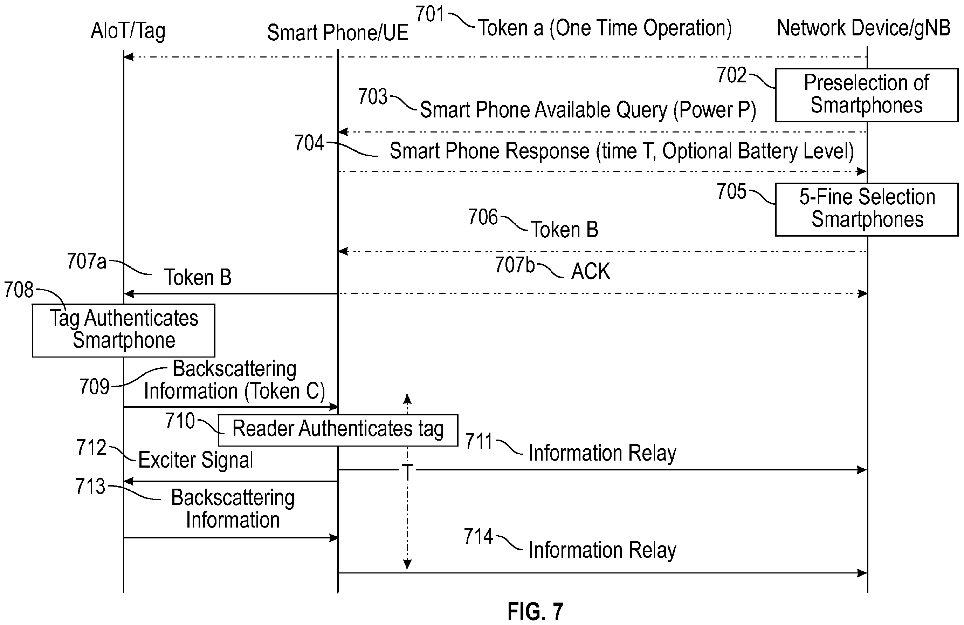

The network device 410 may communicate with the UEs 420, 430 regarding the ambient IoT devices. In aspects, and as will be described in connection with FIG. 5 and FIG. 6, the network device 410 may select and instruct the UEs 420, 430 to provide backscattering service (e.g., transmitting activation signals or reading backscattered signals), and the UEs 420, 430 may provide the backscattering service. For example, the monostatic UE 420 may transmit an activation signal to the ambient IoT device 440 and read the backscattered signal, in the manner shown in FIG. 2. As another example, the monostatic UE 420 may transmit an activation signal to the ambient IoT device 450, and the bistatic UE 430 may read a backscattered signal, in the manner shown in FIG. 3. In aspects, and as will be described in connection with FIGS. 7-9, the network device 410 may provide authentication tokens to the UEs 420, 430 and the ambient IoT devices 440, 450 to allow them to authenticate each other. The authentication will be described in more detail below.

FIG. 4 is merely illustrative of a wireless networking scenario and, as persons skilled in the art will understand, different configurations, types of devices, and numbers of devices may be involved. Such different configurations and devices are within the scope of the present disclosure.

FIG. 5 and FIG. 6 will now describe a process in a network of selecting and instructing UEs to provide backscattering service to ambient tags. FIG. 5 provides a high level description and FIG. 6 provides a more detailed description. The description may use smartphone as an example of a UE, but it is intended and shall be understood that any description referring to smartphone(s) shall be treated as though the description referred to UE(s) (of any type), as well. Also, the description may use gNB as an example of a network device, but it is intended and shall be understood that any description referring to gNB shall be treated as though the description referred to a network device (of any type), as well. The terms "AIoT" and/or "tag" may be used to refer to an ambient IoT device. The term "network device(s)" may be used to indicate one or more network devices.

FIG. 5 is a diagram of example signals and operations involving an AIoT, a smartphone, a gNB. The signal relating to Token A will be described in connection with FIGS. 7-9. As mentioned above, the terms "transmit to," "receive from," and "cooperate with" (and their variations) include communications that may or may not involve communications through one or more intermediate devices or nodes. The present disclosure may use the term "candidate" to refer to a UE that may potentially service an ambient IoT device. The following paragraphs describe various signals and operations. It will be understood that the described signals may have associated operations and the described operations may have associated signals. Accordingly, a described signal may also be an operation and a described operation may also be a signal.

As explained above, FIG. 5 provides a high level description of a process in a network of selecting and instructing UEs to provide backscattering service to ambient tags. At operation 510, the network device(s) perform a preselection of smartphones to be candidates for providing backscattering service to the AIoT(s). In various embodiments, smartphones that are in the vicinity of the AIoT(s) may be a candidate for preselection. Because there may be more smartphones in the vicinity of the AIoT(s) than needed, not every smartphone may be selected. At operation 520, the network device(s) perform a fine selection of smartphones by selecting a subset of the smartphones preselected in operation 510. The fine selection will be described in more detail in connection with FIG. 6.

At operation 530, the network device(s) instruct the smartphones selected by the fine selection to provide backscattering service (e.g., transmit activation signals and/or receive backscattered signals), and the smartphones provide the backscattering service, e.g., in the manner shown in FIGS. 2 and 3. Based on the backscattering service, information stored in the AIoT(s) is relayed though the smartphones to the network device(s). At operation 540, the network device(s) use the information from the AIoT(s) for feedback analysis (e.g., number or percentage of AIoT(s) which provided information) to determine whether the selection of smartphones at operation 520 should be adjusted. If an adjustment is needed, the feedback analysis may be used to adjust the selection of smartphones to provide the backscattering service.

At operation 550, the network device(s) instruct the smartphones selected by operation 540 to provide backscattering service, and the smartphones provide the backscattering service, e.g., in the manner shown in FIGS. 2 and 3. Based on the backscattering service, information stored in the AIoT(s) is relayed though the smartphones to the network device(s), e.g., the smartphones receive the information and transmit the information to the network device(s). At operation 560, the selection of smartphones finishes. Prior to operation 560, the operations 540 and 550 may be repeated multiple times, if further adjustments to the selection of smartphones is needed, which will be described in connection with FIG. 6.

The operations of FIG. 5 are examples. In some aspects, the operations may include additional steps before, after, and in between the enumerated steps. In some aspects, one or more of the enumerated steps may be omitted or performed in a different order. Such variations are contemplated to be within the scope of the present disclosure.

FIG. 6 is a flow diagram of more detailed operations in a network for selecting and instructing UEs to provide backscattering service to ambient tags. Various operations of FIG. 6 use information on tag deployment, such as approximate locations of tags, tag location distribution, and tag density in various regions, which is shown in block 620. Such information 620 may be available to the network device in various ways, such as available in a database maintained by the network or maintained by a third party. The illustrated information 620 is merely an example, and other tag deployment information and/or other information are contemplated to be within the scope of the present disclosure. For example, in various examples, the information 620 may also include UE deployment information, which may include an indication of smartphones available to provide backscattering service to some degree, and approximate location of UEs/smartphones, among other information.

At operation 610, the network device(s) perform a preselection of smartphones to provide backscattering service based on the information 620. In various embodiments, smartphones that are in the vicinity of the tags may be candidates for preselection. The network device(s) may know the approximate locations of the smartphones in various ways, which persons skilled in the art will understand. To avoid preselecting too many smartphones, the network device may analyze the information 620, such as tag density, tag location distribution, and/or number of smartphones in a particular region, among other information. In various examples, the network device may randomly preselect a predetermined number N of smartphones in operation 610 and/or may preselect smartphones based on a predetermined ratio *R* of preselected smartphones to tags. In various examples,

At operation 630, the network device(s) transmit, to the preselected smartphones, a request for an indication of availability to provide backscattering service. The preselected smartphones receive the request and may transmit responses back to the network device(s) indicating availability to provide the backscattering service and no availability to provide the backscattering service.

In various examples, the request from the network device(s) for an indication of availability may include availability to transmit activation signals with at least a specified power level P and/or availability to provide backscattering service for at least a duration of time T₁. In such examples, a smartphone which cannot satisfy power level P or the minimum duration of time T₁ may not provide a response to the network device(s). In various examples, a smartphone which does not have sufficient battery power to provide backscattering service may not respond to the request. In various examples, a smartphone which has a policy prohibiting it from providing backscattering service may not respond to the request.

In various examples, the request from the network device(s) for an indication of availability may include a request for length of availability, and each response from the smartphones may indicate a length of time the respective smartphone is available to provide backscattering service. In various examples, the request from the network device(s) for an indication of availability may include a request for available power to transmit activation signals, and each response from the smartphones may indicate the available power for the respective smartphone.

At operation 640, the network device(s) perform a finer selection of the preselected smartphones based on the information in the responses from the smartphones. In various examples, the fine selection may additionally consider the information 620, such as tag deployment information and/or tag density information and/or smartphone location information, among other information.

In various examples where a smartphone which could not satisfy power level P or a minimum duration of time T₁ did not provide a response to the network device(s), the fine selection of operation 640 may or may not select every smartphone that provided a response. The fine selection may additionally consider the information 620 to make the fine selection.

In various examples, where the smartphones responses include the length of time the smartphones are available, the network device(s) may select smartphones that indicate a length of available time that is greater than a minimum time threshold T₁. In various examples, where the smartphones responses include a level of power that the smartphones have available, the network device(s) may select smartphones that indicate a level of power that is greater than a minimum power threshold. In such examples, the fine selection of operation 640 may or may not select every smartphone that meets the criteria. The fine selection may additionally consider the information 620 to make the fine selection.

The smartphone availability information requested by the network device(s) in operation 630 and used for fine selection in operation 640 are merely examples. Other information regarding smartphone availability to provide backscattering service are contemplated to be within the scope of the present disclosure.

After the fine selection of operation 640, the network device(s) transmit, to the smartphones selected in operation 640, an instruction to provide backscattering service. The corresponding smartphones receive the instruction and begin providing the backscattering service, e.g., in the manner shown in FIGS. 2 and 3.

At operation 650, and based on the backscattering service, information from the tags may be relayed through the smartphones to the network device(s) (e.g., smartphones receive the information and transmit the information to the network device(s)), and/or information from the tags may be received directly by the network device(s) (e.g., one or more network device(s) may read the backscattered signals). Either or both configurations may be implemented to enable the network device(s) to receive tag information.

At operation 660, the network device(s) determine whether the tag information received in operation 650 satisfy a requirement or criterion. In various examples, the requirement or criterion may specify that a particular number of tags must have provided tag information. In various examples, the requirement or criterion may specify that a particular percentage of tags must have provided tag information. In various examples, the requirement or criterion may specify that tag information from the same tags should not be received by the network device(s) more than a particular number of times (e.g., where too many smartphones are selected in a particular region, and smartphone resources become wasted). Such criteria are merely examples, and other criteria are contemplated to be within the scope of the present disclosure. If the requirement or criterion is satisfied, the operations of FIG. 6 may end.

If the requirement or criterion is not satisfied, operation 670 occurs. At operation 670, the network device(s) may adjust the smartphone selection parameters in an effort to satisfy the requirements or criteria. In various examples, operation 670 may adjust the power threshold and/or length of available time threshold for smartphones to be selected. For example, operation 670 may reduce the power threshold and/or the length of available time threshold so that more smartphones may be selected, and consequently, may reach and activate a greater number of tags. In various examples, where tag information from the same tags is received too many times (i.e., from different smartphones), the operation 670 may increase the power threshold and/or the length of available time threshold so that fewer smartphones may be selected, and consequently, less smartphone resources may be wasted. Such adjustments are merely examples, and other adjustments at operation 670 are contemplated to be within the scope of the present disclosure.

After operation 670, operation 640 may occur again to perform a fine selection of smartphones based on the adjusted parameters (from operation 670) and the information from the smartphones (from operation 630). The fine selection of operation 640 may additionally consider information 620, such as tag deployment information and/or smartphone deployment information, among other information. Thus, the operation 640 may select additional smartphones which were preselected in operation 610 and which provided information in operation 630.

In various examples where smartphones which did not satisfy previous availability parameters did not provide information in operation 630, the flow after operation 670 may proceed to operation 630 rather than proceed to operation 640. In such examples, the network device(s) may again request an indication of availability from the smartphones using the adjusted parameters from operation 670, and smartphones which satisfy the adjusted parameters may respond to the request indicating their available to provide backscattering service.

The operations 640-670 (or alternatively 630-670) may run through one iteration or multiple iterations before the requirements or criteria in operation 660 are satisfied and the operations of FIG. 6 end. In various examples, if the requirements or criteria are still not satisfied after a configurable threshold number of iterations (not shown), the process of FIG. 6 may restart at operation 610.

The operations of FIG. 6 are examples. In some aspects, the operations may include additional steps before, after, and in between the enumerated steps. In some aspects, one or more of the enumerated steps may be omitted or performed in a different order. Such variations are contemplated to be within the scope of the present disclosure.

Referring now to FIGS. 7-9, described is an example of an authentication process for ambient IoT devices and UEs to authenticate each other. Authentication refers to a way by which a device may confirm that another entity or device is authorized to communicate with or access it. Persons skilled in the art will recognize and understand various authentication techniques. The present disclosure describes authenticating using tokens, which are pieces of information (e.g., alphanumeric string) that may be processed to confirm an authorization. In various examples, a single token may be processed for authentication. In various examples, two or more tokens may be processed for authentication. In various examples, the processing of a token may comprise processing other parameters together with the token. The processing of one or more tokens for authentication may apply algorithms or techniques that persons skilled in the art will recognize. Such algorithms and techniques are within the scope of the present disclosure.

Tokens may be provided by authentication servers. In various examples, an authentication server may provide a first token (e.g., token A) to an ambient IoT device and may provide a second token (e.g., token B) to a UE. In various examples, token A and token B may be the same (e.g., same alphanumeric string). In various examples, token A and token B may be different (e.g., different alphanumeric strings). The ambient IoT device and the UE may process the pair of tokens - token A and token B - to authenticate each other.

In various examples, the ambient IoT device may provide an additional token (e.g., token C) to the UE. In various examples, token B and token C are different (e.g., different alphanumeric strings). The ambient IoT device may process the pair of tokens - token A and token B - to authenticate the UE. In contrast, the UE may process the pair of tokens - token B and token C - to authenticate the ambient IoT device.

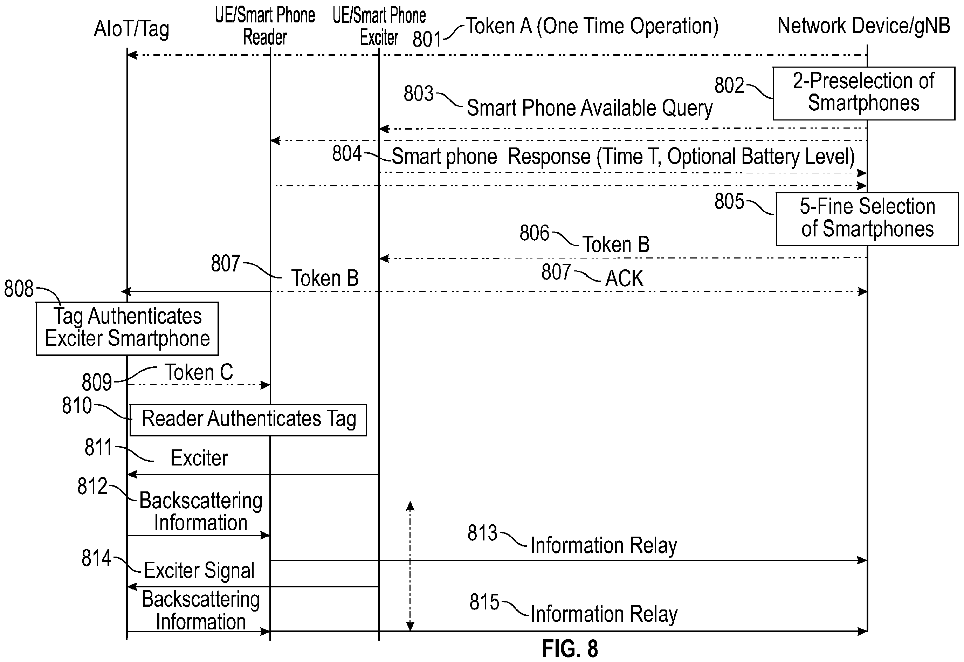

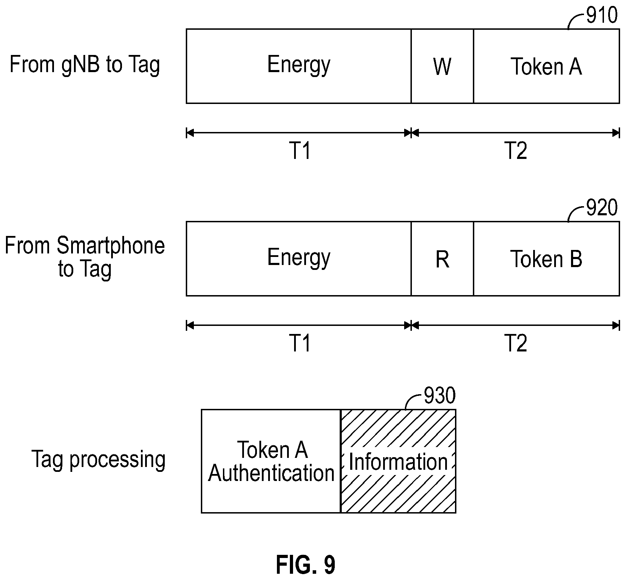

FIG. 7 provides an example of a monostatic configuration, FIG. 8 provides an example of a bistatic configuration, and FIG. 9 provides an example of signals for writing and reading a token. The description may use smartphone as an example of a UE, but it is intended and shall be understood that any description referring to smartphone(s) shall be treated as though the description referred to UE(s) (of any type), as well. Also, the description may use gNB as an example of a network device, but it is intended and shall be understood that any description referring to gNB shall be treated as though the description referred to a network device (of any type), as well. The terms "AIoT" and/or "tag" may be used to refer to an ambient IoT device.

As mentioned above, the terms "transmit to," "receive from," and "cooperate with" (and their variations) include communications that may or may not involve communications through one or more intermediate devices or nodes. The following paragraphs describe various signals and operations. It will be understood that the described signals may have associated operations and the described operations may have associated signals. Accordingly, a described signal may also be an operation and a described operation may also be a signal.

FIG. 7 is a diagram of example monostatic configuration involving an AIoT/tag, a UE/smartphone, and a network device/gNB.

At signal 701, the network device optionally transmits a token A (e.g., first token) to the tag, and the tag receives the token A. Writing the token to the tag will be described in connection with FIG. 9. In various examples, signal 701 may be optional because the tag may already have a token. For example, the tag may be provided with a token (e.g., token A written to the tag) at the time of manufacturing, or the tag may be provided with a token (e.g., token A written to the tag) by a service provider, among other possibilities. In various examples, the tag may be provided with a token the first time it accesses a network, e.g., a 3GPP network. In another example, the tag may be provided with the token by an exciter device (e.g., 250, FIG. 2) when the tag is deployed.

Continuing with signal 701, in various examples, the network device may transmit the token A directly to the tag by operating as an exciter device and sending token A in an activation signal. In various examples, the network device may transmit token A to an exciter device, which then writes the token A to the tag using an activation signal. For example, the exciter device may be also configured to act as a reader device. In various examples, the network device may write the same token A to multiple tags that perform similar functions.

Operations and signals 702-705 may operate in the same manner as operations 610, 630, and 640 of FIG. 6. For example, operation 702 may performs a preselection of smartphones in the manner described for operation 610, signals 703 and 704 may obtain smartphone availability to provide backscattering service in the manner described for operation 630, and operation 705 may performs a fine selection of smartphones in the manner described for operation 640.

At signal 706, the network device transmits a token B to the smartphone, and the smartphone receives the token B from the network device. Token B may be used by the smartphone to authenticate the tag. In various examples, token B may be the same as token A (e.g., same alphanumeric string).

At signal 707a, the smartphone transmits the token B to the tag in an activation signal. The activation signal activates the tag, which receives token B by reading token B from the activation signal. At signal 707b, the smartphone may optionally transmit to the network device a message acknowledging receipt of token B, and the network device may receive the acknowledgment message from the smartphone.

At operation 708, the tag processes token A (which it already possessed) and token B (which it received from the smartphone) to authenticate the smartphone. As mentioned above, the authentication processing uses algorithms or techniques which persons skilled in the art will recognize and understand. Assuming token A and token B are matched with each other or the processing of token A and token B produces a desired result for authentication, the tag authenticates the smartphone and proceeds to signal 709 to transmit a backscattered signal. However, in the case token A and token B are not matched or the processing of token A and token B does not produce the desired result, the tag would not authenticate the smartphone and would not transmit a backscattered signal.

In case the tag authenticates the smartphone at operation 708, then at signal 709, the tag transmits a backscattered signal that includes information stored in the tag, and the smartphone receives the backscattered signal and reads the information in the backscattered signal. The information in the backscattered signal may include the token C mentioned above. The information may also include other data, as well, and all manner of data is contemplated to be within the scope of the present disclosure. In various examples, the backscattered signal may include token B instead of token C. FIG. 7 proceeds on the assumption that the authentication at operation 708 is successful.

At operation 710, the smartphone processes token B (which it already possessed) and token C (which it received from the tag) to authenticate the tag. As mentioned above, the authentication processing uses algorithms or techniques which persons skilled in the art will recognize and understand. Assuming token B and token C are matched with each other or otherwise the processing of token B and token C produces a desired result for authentication, the smartphone authenticates the tag and proceeds to signal 711 to transmit the tag information to the network device. However, in the case token B and token C are not matched or the processing of token B and token C does not produce the desired result, the smartphone would not authenticate the tag and would not transmit the tag information. In various examples, as mentioned above, token B and token C may be the same (e.g., same alphanumeric string). FIG. 7 proceeds on the assumption that the authentication at operation 710 is successful.

In various examples, at operation 710, the smartphone may not need to process the tokens to authenticate the tag. In various examples, if the smartphone receives a backscattering signal from the tag, the presence of the backscattering signal may implicitly authenticate the tag in the case that only authenticated tags are expected to transmit backscattered signals. In such examples, the smartphone may authenticate the tag based on receiving a backscattered signal from the tag.

At signal 711, the smartphone transmits the tag information to the network device, and the network device receives the tag information.

In various examples, the smartphone may continue to provide the backscattering service for a period of time T and may continue to relay tag information to the network device. At signal 712, the smartphone transmits an activation signal, which activates the tag. At signal 713, the tag transmits a backscattered signal that includes tag information, and the smartphone receives the backscattered signal and reads the tag information. At signal 714, the smartphone transmits the tag information to the network device, and the network device receives the tag information. The signals 712-714 may include tokens for authentication.

In various examples, the smartphone and the tag may not need to further authenticate each other during the period of time T. For example, the tag may have the capability to maintain a local timer, and until the local timer expires, the tag will treat the smartphone as authenticated, and vice versa.

In aspects, the token(s) stored at the tag and/or at the smartphone may be changed from time to time. In various examples, after a predetermined time period, the network may transmit one or more replacement tokens to the tag to replace token A and/or token B. In various examples, after each successful authentication operation in operation 708, the tag may change its token(s) using an algorithm that generates token values (e.g., a hash function). In various examples, after each successful authentication operation in operation 710, the smartphone may change its token using an algorithm that generates token values (e.g., a hash function). In various examples, the algorithm that generates token values may be known by the network device and may be shared between the network device and the tag (e.g., at the time of manufacture). Alternatively, as described above, the tokens in the tag and/or in the smartphone may be written once and may not change.

The operations of FIG. 7 are examples. In some aspects, the operations may include additional steps before, after, and in between the enumerated steps. In some aspects, one or more of the enumerated steps may be omitted or performed in a different order. Such variations are contemplated to be within the scope of the present disclosure.

FIG. 8 is a diagram of example bistatic configuration involving an AIoT/tag, a UE/smartphone reader ("reader"), a UE/smartphone exciter ("exciter), and a network device/gNB. The signals and operations in FIG. 8 are, in substance, the same as the signals and operations of FIG. 7, except that some signals and operations are performed by a separate exciter and a separate reader. Generally, the examples and aspects described for FIG. 7 are applicable to FIG. 8 as well. For sake of completeness, certain aspects of FIG. 8 are described below.

Signal 801 may operate in the same manner as signal 701. For example, the network device optionally transmits a token A (e.g., first token) to the tag, and the tag receives the token A.

Operations and signals 802-805 may operate in the same manner as operations 610, 630, and 640 of FIG. 6, except that in the example of FIG. 8, separate reader device and exciter device are involved. For example, operation 802 may perform a preselection of smartphones in the manner described for operation 610, signals 803 and 804 may obtain smartphone availability to provide backscattering service in the manner described for operation 630, and operation 805 may performs a fine selection of smartphones in the manner described for operation 640.

At signal 806, the network device transmits a token B at least to the exciter, and the exciter receives the token B from the network device. The network device may transmit the token B also to the reader, and the reader may receive the token B from the network device. The description of signal 706 and token B in FIG. 7 also applies to signal 806.

At signal 807a, the exciter transmits the token B to the tag in an activation signal. The activation signal activates the tag, which receives token B by reading token B from the activation signal. At signal 807b, the exciter and/or the reader may optionally transmit to the network device a message acknowledging receipt of token B, and the network device may receive the acknowledgment message from the smartphone(s).

At operation 808, the tag processes token A (which it already possessed) and token B (which it received from the exciter) to authenticate the exciter. The description of operation 708 in FIG. 7 also applies to operation 808. FIG. 8 proceeds on the assumption that the authentication at operation 808 is successful.

At signal 809, the tag transmits a backscattered signal that includes information stored in the tag, and the reader receives the backscattered signal and reads the information in the backscattered signal. The description of signal 709 in FIG. 7 also applies to signal 809.

At operation 810, the reader processes token B (which it already possessed) and token C (which it received from the tag) to authenticate the tag. The description of operation 710 in FIG. 7 also applies to operation 810. However, in contrast to FIG. 7, the reader in FIG. 8 may not be able to implicitly authenticate the tag in the first interaction, because the reader has no history of transacting with the tag. In various examples, a way to avoid the authentication operation 810 by the reader is to have a synchronization mechanism through the network device that allows the reader to know when and which tags (or which possible tags) will be excited by exciter.

FIG. 8 proceeds on the assumption that the authentication at operation 810 is successful. Thus, based on the successful authentication operation 810, the reader transmits the tag information to the network device, and the network device receives the tag information.

At signals 811-815, the exciter and the reader may continue to provide the backscattering service for a period of time T and may continue to relay tag information to the network device. The description for signals 711-714 of FIG. 7 apply to signals 811-815.

The operations of FIG. 8 are examples. In some aspects, the operations may include additional steps before, after, and in between the enumerated steps. In some aspects, one or more of the enumerated steps may be omitted or performed in a different order. Such variations are contemplated to be within the scope of the present disclosure.

FIG. 9 shows an example of signals for writing and reading tokens, which may be used in connection with the signals and operations of FIG. 7 or FIG. 8.

In the case of a write signal from the gNB/network device to the tag, signal 910 includes an activation signal over a period of time T1 and includes a write field value W and token A data over a period of time T2. The activation signal activates the tag over period of time T1, and the tag reads the field value W and the token A data over the period of time T2 from the signal. Based on reading the field value W, the tag then writes the token A value to its memory.

In the case of an energy signal from a smartphone to the tag, signal 920 includes an activation signal over a period of time T1 and includes a read field value R and token B data over a period of time T2. The activation signal activates the tag over period of time T1, and the tag reads the field value R and the token A data over the period of time T2 from the signal. Based on reading the field value R, the tag reads the token A value from its memory, which can then be processed with token B for authentication.

In the case of a backscattered signal from the tag, signal 930 includes a backscattered signal that includes a field value showing token A was authenticated and includes tag information.

FIG. 9 is merely illustrative, and other signal structures and signal timing are contemplated to be within the scope of the present disclosure.

Referring now to FIG. 10, there is shown a block diagram of example components of a UE or a network device. The UE or network device includes an electronic storage 1010, a processor 1020, a memory 1050, and a network interface 1040. The various components may be communicatively coupled with each other. The processor 1020 may be and may include any type of processor, such as a single-core central processing unit (CPU), a multi-core CPU, a microprocessor, a digital signal processor (DSP), a System-on-Chip (SoC), or any other type of processor. The memory 1050 may be a volatile type of memory, e.g., RAM, or a non-volatile type of memory, e.g., NAND flash memory. The memory 1050 includes processor-readable instructions that are executable by the processor 1020 to cause the apparatus to perform various operations, including those mentioned herein, such as the operations of FIGS. 5-8.

The electronic storage 1010 may be and include any type of electronic storage used for storing data, such as hard disk drive, solid state drive, and/or optical disc, among other types of electronic storage. The electronic storage 1010 stores processor-readable instructions for causing the UE or network device to perform its operations and stores data associated with such operations, such as storing data relating to 5G NR standards, among other data. The network interface 1040 may implement wireless networking technologies such as 5G NR and/or other wireless networking technologies.

The components shown in FIG. 10 are merely examples, and persons skilled in the art will understand that an apparatus includes other components not illustrated and may include multiples of any of the illustrated components. Such and other embodiments are contemplated to be within the scope of the present disclosure.

Further embodiments of the present disclosure include the following examples.
Example 1-1. A network device comprising:
   means to access ambient IoT device deployment information for a plurality of ambient IoT devices and user equipment apparatus (UE) deployment information for a plurality of user equipment apparatuses (UEs);
   means to select, based on the ambient IoT device deployment information and the UE deployment information, a plurality of candidate user equipment apparatuses (candidate UEs), from among the plurality of UEs, for providing backscattering service to ambient IoT devices; and
   means to iteratively select a subset of UEs, among the plurality of candidate UEs, to provide the backscattering service, the iterative selecting based at least on, for each iteration, at least one of:
      respective availability of the plurality of candidate UEs to provide the backscattering service, or
      at least one criterion relating to respective information in backscattering signals provided by the plurality of ambient IoT devices.
Example 1-2. The network device of Example 1-1, wherein the ambient IoT device deployment information comprises at least one of:
   approximate locations of the plurality of ambient IoT devices, or
   density of the plurality of ambient IoT devices in one or more regions.
Example 1-3. The network device of Example 1-1, wherein the UE deployment information comprises at least one of:
   approximate locations of the plurality of UEs, or
   number of UEs in one or more regions.
Example 1-4. The network device of Example 1-1, wherein the iteratively selecting a subset of UEs comprises, for each iteration:
   means to transmit, to the plurality of candidate UEs, a respective request for an indication of availability to provide the backscattering service with at least a specified activation power P to ambient IoT devices; and
   means to receive, from at least some of the plurality of candidate UEs, respective responses to the respective request, the respective responses comprising, for each respective UE, one of:
      an indication of availability to provide the backscattering service, or
      an indication of no availability to provide the backscattering service.
Example 1-5. The network device of Example 1-4, wherein, for each iteration, the respective request for an indication of availability to provide the backscattering service comprises:
   availability to provide backscattering service for at least a respective duration of time T1,
   wherein the respective duration of time T1 for a respective iteration is adjustable.
Example 1-6. The network device of Example 1-5, further comprising:
   means to, for at least one iteration, adjust the respective duration of time T1 for the respective iteration, the adjusting configured to affect a number of UEs available to provide the backscattering service.
Example 1-7. The network device of Example 1-1, wherein the at least one criterion relating to information in backscattering signals provided by the plurality of ambient IoT devices comprises at least one of:
   number of ambient IoT devices providing information in backscattering signals, or
   percentage of the plurality of ambient IoT devices providing information in backscattering signals.
Example 1-8. The network device of Example 1-7, wherein iteratively selecting the subset of the plurality of candidate UEs to provide the backscattering service comprises: means to select a larger subset of UEs in response to at least one of:
   the number of ambient IoT devices providing information in backscattering signals being less than a number threshold, or
   the percentage of the plurality of ambient IoT devices providing information in backscattering signals being less than a percentage threshold.
Example 2-1. A user equipment apparatus comprising:
   means to receive, from a network device, a first request for an indication of availability to provide backscattering service to ambient IoT devices for a first duration of time;
   means to transmit, to the network device, a response to the first request;
   means to receive, from a network device, a second request for an indication of availability to provide backscattering service to ambient IoT devices for a second duration of time; and
   means to transmit, to the network device, a response to the second request.
Example 2-2. The user equipment apparatus of Example 2-1, wherein the second duration of time is less than the first duration of time.
Example 2-3. The user equipment apparatus of Example 2-2, wherein the response to the first request comprises an indication of no availability to provide the backscattering service for the first duration of time, and
   wherein the response to the second request comprises an indication of availability to provide the backscattering service for the second duration of time.
Example 2-4. The user equipment apparatus of Example 2-1, wherein the response to the first request comprises an indication of availability to provide the backscattering service for the first duration of time, and
   wherein the response to the second request comprises an indication of no availability to provide the backscattering service for the second duration of time.
Example 2-5. The user equipment apparatus of Example 2-1, wherein the second duration of time is greater than the first duration of time.
Example 2-6. The user equipment apparatus of Example 2-5, wherein the response to the first request comprises an indication of availability to provide the backscattering service for the first duration of time, and
   wherein the response to the second request comprises an indication of no availability to provide the backscattering service for the second duration of time. The embodiments and aspects disclosed herein are examples of the present disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this present disclosure. The phrase "a plurality of" may refer to two or more.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the present disclosure have been shown in the drawings, it is not intended that the present disclosure be limited thereto, as it is intended that the present disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. A network device comprising:
at least one processor; and
at least one memory storing instructions which, when executed by the at least one processor, cause the network device at least to:
access ambient IoT device deployment information for a plurality of ambient IoT devices and user equipment apparatus (UE) deployment information for a plurality of user equipment apparatuses (UEs);
select, based on the ambient IoT device deployment information and the UE deployment information, a plurality of candidate user equipment apparatuses (candidate UEs), from among the plurality of UEs, for providing backscattering service to ambient IoT devices; and
iteratively select a subset of UEs, among the plurality of candidate UEs, to provide the backscattering service, the iterative selecting based at least on, for each iteration, at least one of:
respective availability of the plurality of candidate UEs to provide the backscattering service, or
at least one criterion relating to respective information in backscattering signals provided by the plurality of ambient IoT devices.

2. The network device of claim 1, wherein the ambient IoT device deployment information comprises at least one of:
approximate locations of the plurality of ambient IoT devices, or
density of the plurality of ambient IoT devices in one or more regions.

3. The network device of claim 1, wherein the UE deployment information comprises at least one of:
approximate locations of the plurality of UEs, or
number of UEs in one or more regions.

4. The network device of claim 1, wherein in iteratively selecting a subset of UEs, the instructions, when executed by the at least one processor, cause the network device at least to, for each iteration:
transmit, to the plurality of candidate UEs, a respective request for an indication of availability to provide the backscattering service with at least a specified activation power P to ambient IoT devices; and
receive, from at least some of the plurality of candidate UEs, respective responses to the respective request, the respective responses comprising, for each respective UE, one of:
an indication of availability to provide the backscattering service, or
an indication of no availability to provide the backscattering service.

5. The network device of claim 4, wherein, for each iteration, the respective request for an indication of availability to provide the backscattering service comprises:
availability to provide backscattering service for at least a respective duration of time T₁,
wherein the respective duration of time T₁ for a respective iteration is adjustable.

6. The network device of claim 5, wherein the instructions, when executed by the at least one processor, further cause the network device at least to:
for at least one iteration, adjust the respective duration of time T₁ for the respective iteration, the adjusting configured to affect a number of UEs available to provide the backscattering service.

7. The network device of claim 1, wherein the at least one criterion relating to information in backscattering signals provided by the plurality of ambient IoT devices comprises at least one of:
number of ambient IoT devices providing information in backscattering signals, or
percentage of the plurality of ambient IoT devices providing information in backscattering signals.

8. The network device of claim 7, wherein in iteratively selecting the subset of the plurality of candidate UEs to provide the backscattering service, the instructions, when executed by the at least one processor, cause the network device at least to select a larger subset of UEs in response to at least one of:
the number of ambient IoT devices providing information in backscattering signals being less than a number threshold, or
the percentage of the plurality of ambient IoT devices providing information in backscattering signals being less than a percentage threshold.

9. A method comprising:
accessing, by a network device, ambient IoT device deployment information for a plurality of ambient IoT devices and user equipment apparatus (UE) deployment information for a plurality of user equipment apparatuses (UEs);
selecting, based on the ambient IoT device deployment information and the UE deployment information, a plurality of candidate user equipment apparatuses (candidate UEs), from among the plurality of UEs, for providing backscattering service to ambient IoT devices; and
iteratively selecting a subset of UEs, among the plurality of candidate UEs, to provide the backscattering service, the iterative selecting based at least on, for each iteration, at least one of:
respective availability of the plurality of candidate UEs to provide the backscattering service, or
at least one criterion relating to respective information in backscattering signals provided by the plurality of ambient IoT devices.

10. The method of claim 9, wherein the ambient IoT device deployment information comprises at least one of:
approximate locations of the plurality of ambient IoT devices, or
density of the plurality of ambient IoT devices in one or more regions.

11. The method of claim 9, wherein the UE deployment information comprises at least one of:
approximate locations of the plurality of UEs, or
number of UEs in one or more regions.

12. The method of claim 9, wherein iteratively selecting a subset of UEs comprises, for each iteration:
transmitting, to the plurality of candidate UEs, a respective request for an indication of availability to provide the backscattering service with at least a specified activation power P to ambient IoT devices; and
receive, from at least some of the plurality of candidate UEs, respective responses to the respective request, the respective responses comprising, for each respective UE, one of:
an indication of availability to provide the backscattering service, or
an indication of no availability to provide the backscattering service.

13. The method of claim 12, wherein, for each iteration, the respective request for an indication of availability to provide the backscattering service comprises:
availability to provide backscattering service for at least a respective duration of time T_{1,}
wherein the respective duration of time T₁ for a respective iteration is adjustable.

14. A user equipment apparatus comprising:
at least one processor; and
at least one memory storing instructions which, when executed by the at least one processor, cause the user equipment apparatus at least to:
receive, from a network device, a first request for an indication of availability to provide backscattering service to ambient IoT devices for a first duration of time;
transmit, to the network device, a response to the first request;
receive, from a network device, a second request for an indication of availability to provide backscattering service to ambient IoT devices for a second duration of time; and
transmit, to the network device, a response to the second request.

15. A method comprising:
receiving, by a user equipment apparatus, from a network device, a first request for an indication of availability to provide backscattering service to ambient IoT devices for a first duration of time;
transmitting, to the network device, a response to the first request;
receiving, from a network device, a second request for an indication of availability to provide backscattering service to ambient IoT devices for a second duration of time; and
transmitting, to the network device, a response to the second request.
